# EUROPEAN PATENT APPLICATION

(11) **EP 4 509 399 A1**
(43) Date of publication of application: **19.02.2025**
(21) Application number: 24185798.6
(22) Date of filing: 01.07.2024
(51) Int. Cl.: B64C 1/18

(54) **THRESHOLDS FOR FLOORING IN AN AIRCRAFT**

(30) Priority: 15.08.2023 US 202318449869
(71) Applicant: The Boeing Company, Arlington, VA 22202 (US)
(72) Inventor: SHEPHERD, Rick Eugene, ARLINGTON, 22202 (US)
(74) Representative: Plasseraud IP

(57) **Abstract**

Thresholds for flooring in an aircraft are described herein. An example aircraft includes a subfloor (302), first flooring material (304) on the subfloor, second flooring material (306) on the subfloor, and a threshold (200) at least partially between the first flooring material (304) and the second flooring material (306). The threshold includes a vertical body portion (202) having a top surface (206), a bottom surface (208), a first side surface (210), and a second side surface (212). The vertical body portion has a concave area (214) extending into the second side surface (212) at the bottom surface, and wherein the second edge (320) of the second flooring material extends into the concave area. The threshold also includes a ramp portion (204) extending from the first side surface (210). The ramp portion (204) has a decreasing thickness from the vertical body portion (202) to a distal end (224) of the ramp portion. The ramp portion (204) is positioned between a portion of the first flooring material (304) and the subfloor (302).

## Description

### FIELD OF THE DISCLOSURE

This disclosure relates generally to thresholds and, more particularly, to thresholds for flooring in an aircraft.

### BACKGROUND

Aircraft fuselages often have different types of flooring materials in different sections of the fuselage. For example, some sections have non-textile flooring (NTF) such as vinyl or rubber mats while other sections have textile flooring such as carpet. Thresholds are installed between the edges where the two flooring materials meet.

### SUMMARY

An aircraft includes a subfloor, first flooring material on the subfloor, the first flooring material having a first edge, and second flooring material on the subfloor, the second flooring material having a second edge. The aircraft includes a threshold at least partially between the first flooring material and the second flooring material. The threshold includes a vertical body portion having a top surface, a bottom surface opposite the top surface, a first side surface, and a second side surface opposite the first side surface. The vertical body portion has a concave area extending into the second side surface at the bottom surface, wherein the second edge of the second flooring material extends into the concave area. The threshold also includes a ramp portion extending from the first side surface. The ramp portion has a decreasing thickness from the vertical body portion to a distal end of the ramp portion. The ramp portion is positioned between a portion of the first flooring material and the subfloor.

A threshold to be installed between two flooring materials includes a vertical body portion having a top surface, a bottom surface opposite the top surface, a first side surface, and a second side surface opposite the first side surface. The second side surface has a concave area at the bottom surface to receive an edge of a flooring material. The concave area forms an overhang on the second side surface. The threshold also includes a ramp portion extending from the first side surface. The ramp portion has a decreasing thickness from the vertical body portion to a distal end of the ramp portion.

A method of installing flooring materials and a threshold in an aircraft includes adhering a first portion of a first flooring material to a subfloor in the aircraft and adhering the threshold to the subfloor near a first edge of the first flooring material. The threshold includes a vertical body portion having a top surface, a bottom surface opposite the top surface, a first side surface, and a second side surface opposite the first side surface. The vertical body portion has a concave area extending into the second side surface at the bottom surface. The threshold also includes a ramp portion extending from the first side surface. The ramp portion has a decreasing thickness from the vertical body portion to a distal end of the ramp portion. The method also includes adhering a second portion of the first flooring material on top of the ramp portion of the threshold such that the first edge of the first flooring material is adjacent the first side surface of the vertical body portion. The method also includes adhering a second flooring material to the subfloor and tucking a second edge of the second flooring material into the concave area of the threshold.

### BRIEF DESCRIPTION OF THE DRAWINGS

FIG. 1 illustrates an example aircraft in which the example thresholds disclosed herein can be implemented.
FIG. 2 is a cross-sectional or side view of an example threshold constructed in accordance with the teachings of this disclosure.
FIG. 3 is a cross-sectional or side view of flooring of the example aircraft of FIG. 1 with the example threshold of FIG. 2.
FIG. 4A shows an example of serging carpet edge treatment.
FIG. 4B shows an example of speedbinding carpet edge treatment.
FIG. 4C shows an example of carpet without edge treatment.
FIG. 5 is a cross-sectional or side view of another example threshold.
FIG. 6 is a cross-sectional or side view of another example threshold.
FIG. 7 is a cross-sectional or side view of another example threshold.
FIG. 8 is a cross-sectional or side view of another example threshold.
FIG. 9 is a flowchart representative of an example method of installing flooring materials and an example threshold.

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

### DETAILED DESCRIPTION

Disclosed herein are example thresholds (sometimes referred to as transition strips) that can be installed at joints between two flooring materials. Thresholds are used to form a smooth transition where the edges of two flooring materials meet. Thresholds are commonly used in aircraft between different flooring sections. For example, the galley of the fuselage often has a mat or plastic flooring, whereas the passenger area of the fuselage has carpet flooring. A threshold can be installed between the edges of the mat and the carpet. The threshold helps to keep the mat and/or the carpet from lifting, as well as provides a smooth transition from one flooring material to the other as they are of different thicknesses

Known thresholds are relatively bulky and create a noticeable bump between the two flooring materials. This bump can be a nuisance to wheeled-devices such as galley carts, luggage, wheel chairs, knee scooters, etc. Further, known thresholds have long arms that extend over the tops of both flooring materials. These arms form weak points of the threshold that are prone to cracking, chipping, warping, and shrinkage problems.

Disclosed herein are low profile thresholds that do not create a large bump as seen in known threshold designs. This enables galley carts and other wheeled-devices to easily roll between the two flooring materials without causing a noticeable bump. The example thresholds disclosed herein are also less prone to failure, which reduces costs associated with maintenance of the aircraft. The example thresholds disclosed herein are lighter and constructed of less material than known thresholds. As such, the example thresholds disclosed herein are less expensive to manufacture. The example thresholds disclosed herein can be used for new installations or retrofitted on existing floorings during refreshes (e.g., every 3-6 months).

An example threshold disclosed herein includes a vertical body portion and a ramp portion. In some examples, the threshold is constructed as a single or unitary part (e.g., a monolithic structure), such as via an extrusion process. In some examples, the threshold is constructed of thermoplastic polyurethane (TPU). The vertical body portion is disposed between the edges of the first and second flooring materials. The ramp portion extends from a first side of the vertical body portion and is installed under the first flooring material (e.g., a mat). The ramp portion has an increasing thickness to raise the first flooring material up closer to the height of the second flooring material (e.g., carpet). The second side surface of the vertical body portion has a concave area (e.g., a cove or recess) that forms a small overhang. An edge of the second flooring material is tucked into the concave area. The small overhang reduces or limits the amount the edge of the second flooring material can be lifted. The overhang is relatively small compared to the arms of known thresholds. This reduces or limits weak points that can lead to cracking.

While the example thresholds disclosed herein are described in connection with floors in an aircraft, the example thresholds disclosed herein can also be used in connection with any floor. For example, the thresholds can be used in other types of vehicles (e.g., buses, trains, etc.), in residential buildings, in commercial buildings, and/or any other location where thresholds are commonly used between two flooring materials.

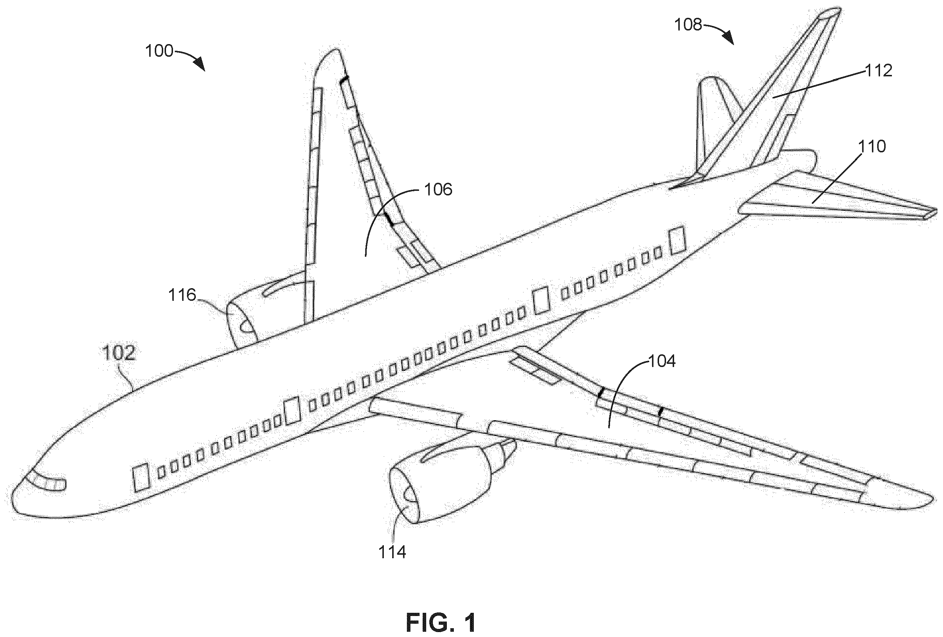

FIG. 1 illustrates an example aircraft 100 in which the examples disclosed herein can be implemented. In the illustrated example, the aircraft 100 includes a fuselage 102, a first wing 104 (a left wing) coupled to the fuselage 102, a second wing 106 (a right wing) coupled to the fuselage 102, and an empennage 108 at an aft end of the fuselage 102. The empennage 108 has a horizontal stabilizer 110 and a vertical stabilizer 112. The aircraft 100 also includes a first engine 114 carried by the first wing 104 and a second engine 116 carried by the second wing 106. In other examples, the aircraft 100 may have multiple engines coupled to each of the first and second wings 104, 106 and/or disposed in other locations on the aircraft 100 (e.g., coupled to the fuselage 102, coupled to the empennage 108, etc.).

The fuselage 102 of the aircraft 100 carries passengers and/or cargo. The fuselage 102 may contain one or more floors or levels having flooring. The flooring may include carpets and/or mats, for example. Disclosed herein are example thresholds that can be used between the edges or joints where two flooring materials meet.

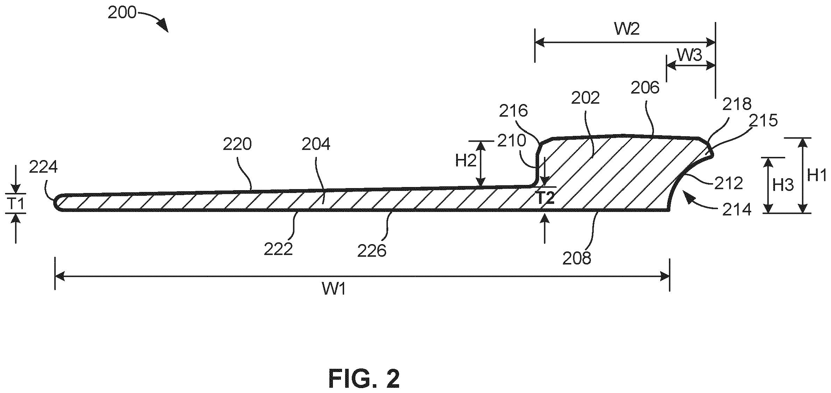

FIG. 2 is a cross-sectional or side view of an example threshold 200 that can be used in the example aircraft 100. For example, the threshold 200 can be used as a transition between two flooring materials (e.g., a mat and carpet) in the fuselage 102 of the aircraft 100. The threshold 200 forms a smooth transition between the flooring materials to reduce (e.g., minimize) bumps as well as damage to the flooring materials.

The threshold 200 has one or more portions or sections. In the illustrated example, the threshold 200 has a vertical body portion 202 and a ramp portion 204 coupled to and extending from the vertical body portion 202. When the threshold 200 is installed between two flooring materials, the vertical body portion 202 is disposed between the edges of the two flooring materials, and the ramp portion 204 extends under one of the flooring materials to help raise the flooring material to the same height as the other flooring material. The threshold 200 can be constructed to any length (the dimension extending into and out of the page). As shown in FIG. 2, the vertical body portion 202 has a generally rectangular cross-sectional shape. The vertical body portion 202 has a top surface 206, a bottom surface 208 opposite the top surface 206, a first side surface 210, and a second side surface 212 opposite the first side surface 210.

In the illustrated example, the vertical body portion 202 has a concave area 214 extending into the second side surface 212 at the bottom surface 208. Said another way, the second side surface 212 has or forms the concave area 214 at the bottom surface 208. The concave area 214 may also be referred to as a recess or cove. The concave area 214 receives an edge of the flooring material, as shown in further detail herein. The concave area 214 forms an overhang 215 on the second side surface 212, which extends outward from the top surface 206. The overhang 215 helps prevent the flooring material from lifting, as shown in further detail herein.

As shown in FIG. 2, the vertical body portion 202 of the threshold 200 has a first edge 216 between the top surface 206 and the first side surface 210. In the illustrated example, the first edge 216 is curved or rounded. In some examples, the first edge 216 has a constant radius of curvature. The threshold 200 also has a second edge 218 between the top surface 206 and the second side surface 212. In the illustrated example, the second edge 218 is curved or rounded. In some examples, the second edge 218 has a constant radius of curvature. In some examples, the first and second edges 216, 218 have a radius of curvature of 0.89 mm (0.035 inches). In other examples, the radius of curvature may be larger or smaller. In some examples, the first and second edges 216, 218 are curved or rounded to provide a smooth transition along the top surface 206 of the threshold 200.

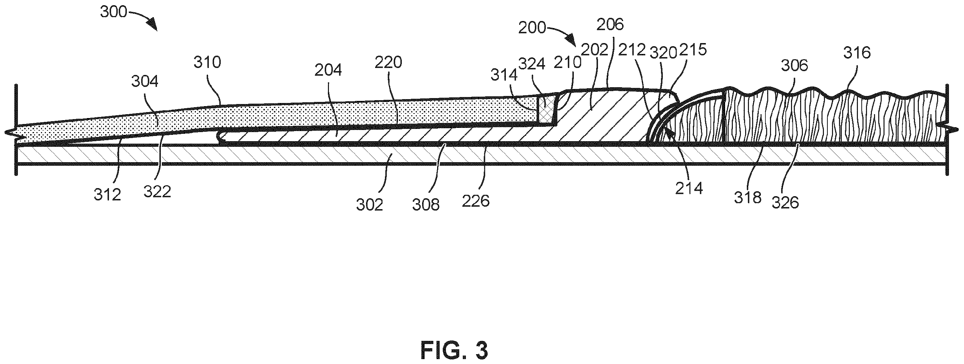

In the illustrated example of FIG. 2, the top surface 206 of the vertical body portion 202 is curved or rounded (e.g., is convex) between the first edge 216 and the second edge 218. This curved or rounded shape helps address any tolerances between the heights of the mat 304 and the carpet 306 depicted in FIG. 3. As such, this curved or rounded shape helps provide a smooth transition between the flooring materials. In some examples, the top surface 206 has a continuous curvature between the first edge 216 and the second edge 218. In some examples, the top surface 206 is curved at a constant radius of curvature between the first edge 216 and the second edge 218. In some examples, the radius of curvature is 50 mm (2 inches). In other examples, the radius of curvature may be larger or smaller. In other examples, the top surface 206 may be curved at a changing radius of curvature between the first edge 216 and the second edge 218.

In the illustrated example, the ramp portion 204 extends from the first side surface 210 of the vertical body portion 202 at the bottom surface 208. The ramp portion 204 has a top surface 220, a bottom surface 222 opposite the top surface 220, and a distal end 224. In the illustrated example, the distal end 224 of the ramp portion 204 is rounded or curved. However, in other examples, the distal end 224 can have sharp corners (e.g., 90° corners). The bottom surface 222 of the ramp portion 204 is continuous with the bottom surface 208 of the vertical body portion 202. Therefore, the bottom surface 222 and the bottom surface 208 form a bottom side or surface 226 of the threshold 200. The ramp portion 204 has a decreasing thickness (e.g., height) from the vertical body portion 202 (the ride side in FIG. 2) to the distal end 224 of the ramp portion 204 (the left side in FIG. 2). Said another way, the ramp portion 204 increases in thickness from the distal end 224 to the vertical body portion 202. For example, as shown in FIG. 2, the ramp portion 204 has a first thickness T1 at the distal end 224 and a second thickness T2 at the connection to the vertical body portion 202. The thickness T2 is greater than the thickness T1. This increasing thickness raises the flooring material to a height that is closer to the top surface 206 of the threshold 200 and to the other flooring material.

In some examples, the threshold 200 is constructed of thermoplastic polyurethane (TPU). For example, the threshold can be constructed of Lubrizol ESTANE° 58244, which is an ether based TPU. This type of material has increased durability and dimensional stability. In other examples, the threshold 200 is constructed of polyvinyl chloride (PVC), such as BMS 8-137. In other examples, the threshold 200 can be constructed of other types of materials. In this example, the threshold 200 is constructed as a single or monolithic structure. For example, the threshold 200 may be manufactured via an extrusion process or molding process. In other examples, the threshold 200 can be constructed of two or more separate portions (e.g., the vertical body portion 202 and the ramp portion 204) that are coupled together (e.g., via a joining process) to form the threshold 200. The threshold 200 can be constructed as any length depending on the length of the edges of the flooring materials.

Various dimensions are shown in FIG. 2. The threshold 200 has an overall height of H1 between the bottom surface 226 and the top surface 206. The first side surface 210 has a height of H2 between the top surface 220 of the ramp portion 204 and the top surface 206 of the vertical body portion 202. The bottom surface 226 of the threshold 200 has a width W1. The vertical body portion 202 has a width W2. The ramp portion 204 increases in thickness from T1 to T2. The overhang 215 has a width W3 and a height H3. The dimension can be based on the type and/or thicknesses of the flooring materials between which a transition is needed. In some examples, the ratio W1/W2 is greater than 2 or 3. This is because the ramp portion 204 is relatively wide (in the horizontal direction) compared to the vertical body portion. In some examples, having a larger width W1 provides a sufficient lower surface for adhesive or double-sided tape widths, while also providing enough material to be tucked under the flooring material (e.g., a mat) to help hold the threshold 200 down, which provides more stability and rigidity to the threshold 200. This also results in a longer, more gradual rise in the height of the flooring material, which reduces (e.g., minimizes) noticeable bumps in the flooring. In some examples, having a smaller width W2 is advantageous for aesthetic purposes, because it reduces (e.g., minimizes) the amount of plastic that is visible (more plastic is generally less aesthetically pleasing).

FIG. 3 is a cross-sectional view of a portion of a floor 300 in the fuselage 102 (FIG. 1) of the aircraft 100 (FIG. 1) in which the threshold 200 is used. In the illustrated example, the floor 300 includes a subfloor 302 upon which one on more flooring materials are layered. The subfloor 302 may be constructed of one or more floor panels of various materials. In some examples, the subfloor 302 is a constructed of a composite material, such as a honeycomb core with graphite or fiberglass plies on the top and bottom. In other examples, the subfloor 302 can be constructed of other materials (e.g., wood, plastic, etc.).

The floor 300 of the aircraft 100 includes a first flooring material 304 on the subfloor 302 and a second flooring material 306 on the subfloor 302. In this example, the first flooring material 304 is a mat (e.g., a vinyl mat), referred to herein as the mat 304, and the second flooring material 306 is carpet, referred to herein as the carpet 306. The threshold 200 is at least partially disposed between the mat 304 and the carpet 306 and provides a smooth transition between the mat 304 and the carpet 306. For example, the mat 304 may be the flooring in the galley of the fuselage 102 (FIG. 1) and the carpet 306 may be the flooring in the passenger seating area of the fuselage 102. The threshold 200 provides a smooth transition between these two different flooring materials and areas of the fuselage 102. In some examples, the mat 304 and the carpet 306 have different heights or thicknesses relative to the subfloor 302. Therefore, the threshold 200 also provides a smooth transition between the two different heights. In other examples, the first and second flooring materials 304, 306 can be other types and/or combinations of materials, such as carpet and carpet, mat and mat, carpet and laminate, mat and laminate, etc.

In the illustrated example, the threshold 200 is disposed on the subfloor 302. In some examples, the threshold 200 is coupled to the subfloor 302 via an adhesive. For example, as shown in FIG. 3, an adhesive layer 308 is disposed between the bottom surface 226 of the threshold 200 and the subfloor 302. The adhesive layer 308 holds the threshold 200 in position on the subfloor 302. In some examples, the adhesive layer 308 is tape, such as a double-sided tape (e.g., BMS 5-133 Type II, Class 2 tape). In some examples, the adhesive layer 308 is a self-adhesive layer on the bottom surface 226 of the threshold 200. In other examples, other types of adhesives can be used (e.g., glue). In still other examples, no adhesive layer is used. Instead, the bottom surface 226 of the threshold 200 can be in direct contact with the subfloor 302 and/or coupled to the subfloor 302 via other mechanisms (e.g., nails, screws, etc.).

The mat 304 has a top surface 310, a bottom surface 312, and a first edge 314. The carpet 306 has a top surface 316, a bottom surface 318, and a second edge 320. In some examples, the thickness of the mat 304 and the carpet 306 are different. For example, in FIG. 3, the mat 304 has a smaller thickness than the carpet 306. The threshold 200 is at least partially disposed between the edges 314, 320 of the mat 304 and the carpet 306 and used to create a smooth transition between the two types of flooring and their respective heights.

In the illustrated example, a portion of the mat 304 is disposed on or over the ramp portion 204 of the threshold 200. Said another way, the ramp portion 204 is between a portion of the mat 304 and the subfloor 302. In some examples, the weight of the portion of the mat 304 on the ramp portion 204 helps hold the threshold 200 in place. Further, as discussed above, the mat 304 may be thinner than the carpet 306. Therefore, the ramp portion 204 provides a gradual increase to the height of the mat 304 so the top surface 310 of the mat 304 is closer to or the same as the height of the top surface 206 of the threshold 200 and the top surface 316 of the carpet 306. This enables wheeled-devices to easily and smoothly roll between the two flooring materials.

In some examples, the mat 304 is coupled to the subfloor 302 via an adhesive layer. For example, FIG. 3 shows an example adhesive layer 322 on the bottom surface 312 of the mat 304. The adhesive layer 322 helps the mat 304 stick to the subfloor 302 to prevent or limit movement. Also, as shown in FIG. 3, the adhesive layer 322 is also between the bottom surface 312 of the mat 304 and the top surface 220 of the ramp portion 204. This helps the threshold 200 remain coupled to the mat 304 and reduces or limits relative movement between the mat 304 and the threshold 200. In some examples, the adhesive layer 322 is a self-adhesive layer that is manufactured with the mat 304, and a liner is provided over the self-adhesive layer. Before installing the mat 304, the liner is removed to expose the self-adhesive layer. In other examples, the adhesive layer 322 can be another type of adhesive, such as a tape (e.g., double-sided tape).

In some examples, the first edge 314 of the mat 304 does not extend all the way to the first side surface 210 of the vertical body portion 202 of the threshold 200. As shown in FIG. 3, a sealant 324 is disposed between the first edge 314 of the mat 304 and the first side surface 210 of the vertical body portion 202. The sealant 324 may be, for example, BAC5010 TY 60 (RTV108 - Silicone Sealant), BMS5-142, BMS5-45, or another type of sealant. The sealant 324 fills the gap or space between the first edge 314 of the mat 304 and the first side surface 210 of the threshold 200 to provide a smooth transition between the top surface 310 of the mat 304 and the top surface 206 of the threshold 200. The sealant 324 also prevents liquids from getting underneath the mat 304.

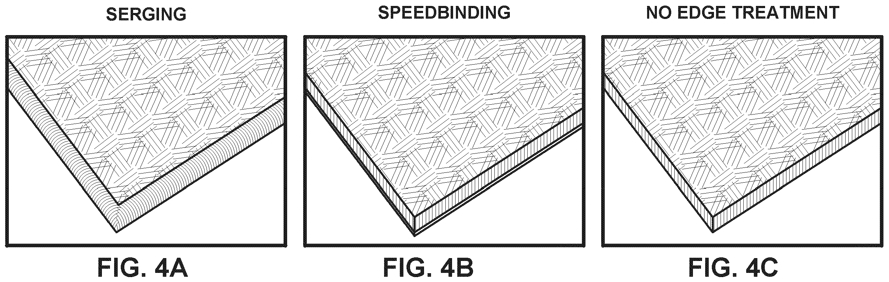

In the illustrated example, the second edge 320 of the carpet 306 extends into (e.g., is tucked into) the concave area 214 formed on the second side surface 212 of the threshold 200. In some examples, the second edge 320 of the carpet 306 is in contact with the second side surface 212 of the threshold 200. As shown in FIG. 3, the second edge 320 of the carpet 306 is rounded or curved. In some examples, the second edge 320 of the carpet 306 is edge treated, which helps prevent the carpet 306 from fraying. FIGS. 4A and 4B show two example edge treatments for the carpet 306, including serging and speedbinding. In other examples, other types of edge treatments can be implemented. In other examples, such as shown in FIG. 4C, no edge treatment may be provided. Referring back to FIG. 3, in some examples, the carpet 306 is coupled to the subfloor via an adhesive layer 326. In some examples, the carpet 306 is manufactured with a self-adhesive layer or sticky dots on the bottom surface 318 and covered with a liner. Before installing the carpet 306, the liner is removed, and then the carpet 306 can be pressed onto the subfloor 302.

As shown in FIG. 3, the second edge 320 of the carpet 306 is disposed in the concave area 214. As such, the overhang 215 of the threshold 200 is above (e.g., overhangs) a portion of the carpet 306. The overhang 215 limits or prevents the second edge 320 of the carpet 306 from being lifted away from the subfloor 302. The design of the concave area 214 and the overhang 215 also reduces (e.g., minimizes) or limits any gaps between the threshold 200 and the carpet 306. The overhang 215 is relatively small compared to known thresholds that have long arms that extend over the top of the carpet 306. In some examples, the overhang 215 has a width W3 (FIG. 2) of less than about 2.540 mm (0.100 inches) (e.g., ±0.25 mm or 0.01 inches) in the horizontal direction. Known thresholds that have long arms extend about 25 mm (1 inch) or more in the horizontal direction. Therefore, in some examples, the overhang 215 is about 1/10^{th} the size of a traditional arm on a threshold. Having a smaller overhang reduces or eliminates weak points for cracking and/or lifting. In other examples, the overhang 215 can have a width W3 that is greater than 2.540 mm (0.100 inches). The width W3 may depend on the type and/or size of flooring material.

As shown in FIG. 3, the top surface 206 of the threshold 200 provides a smooth transition between the top surface 310 of the mat 304 and the top surface 316 of the carpet 306. The transition is relatively low and does not cause a noticeable bump as seen in known thresholds. This enables wheeled-devices to easily cross over the transition between the mat 304 and the carpet 306. This also reduces impacts and therefore wear and tear on the threshold 200, and thereby improves the life of the threshold 200.

As disclosed above, the various dimensions of the threshold 200 can be selected based on the type and/or size of the flooring materials. In some examples, the threshold 200 is dimensioned to be used with a range of flooring material thicknesses. For example, assume the mat 304 has a minimum thickness of 1.50 mm (0.059 inches (")) and a maximum thickness for 3.35 mm (0.132"), and the carpet 306 has a minimum thickness of 3.55 mm (0.14") and a maximum thickness of 12.0 mm (0.47"). In such an example, referring to FIG. 2, the overall height H1 is 4.3 mm (0.17"), the height H2 is 2.8 mm (0.11"), the width W1 is 35.5 mm (1.4"), the width W2 is 10.2 mm (0.40"), the thickness T1 is 1.0 mm (0.04"), the thickness T2 is 1.5 mm (0.06"), the width W3 of the overhang 215 is 25.4 mm (0.100"), and the height H3 of the overhang 215 is 3.12 mm (0.123"). These dimensions enable the threshold 200 to be used with mats and carpeting having the above-noted ranges of thicknesses, which are commonly found on aircraft. However, in other examples, the threshold 200 can be constructed to have different dimensions. For instance, with thicker/taller carpets, the thickness T1 and the height H1 may be larger. As another example, the height H3 of the overhang 215 may be larger or smaller depending on the thickness of the carpet. In some examples, the height H3 of the overhang 215 may be in the range of 3.12 mm-10.2 mm (0.123"- 0.400").

In the illustrated example, the threshold 200 has the overhang 215 on one side and the ramp portion 204 on the opposite side. In this example, the first side surface 210 of the vertical body portion 202 does not have an overhang or arm that overhangs the mat 304. Further, the second side surface 212 does not have a ramp portion that extends below the carpet 306. Therefore, the threshold 200 has an overhang on one side and a ramp portion on the opposite side. This minimal design results in less material and, thus, is lighter and less expensive to manufacture. However, in other examples, the threshold 200 may have overhangs and/or ramps on both sides.

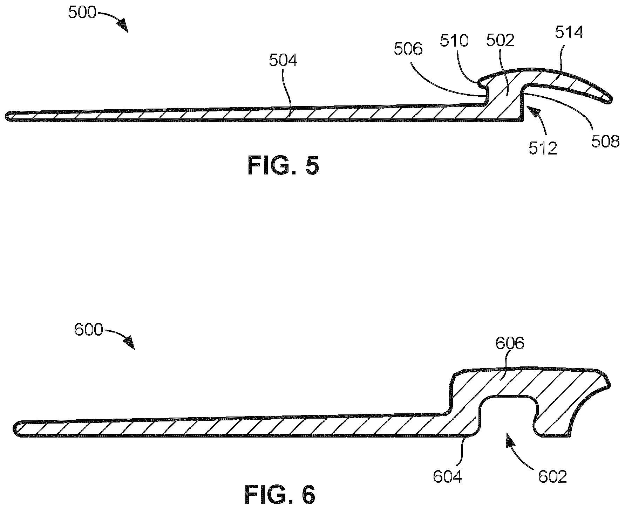

FIGS. 5-8 illustrate other example thresholds that may be implemented in the aircraft 100 between the mat 304 and the carpet 306. The example thresholds are similar to the threshold 200, except as noted below and shown in the figures. Any of the example aspects (e.g., dimensions, materials, etc.) disclosed in connection with the threshold 200 can likewise apply to the thresholds in FIGS. 5-8.

FIG. 5 shows an example threshold 500 having a vertical body portion 502 and a ramp portion 504. The vertical body portion 500 has a first surface side 506 and a second side surface 508. In this example, the first side 506 has an overhang 510. Therefore, when the mat 304 is installed, the overhang 510 is above or overhangs a portion of the mat 304. This limits or prevents the mat 304 from lifting. Further, as shown in FIG. 5, a concave area 512 is formed on the second side surface 508. The concave area 512 is larger than the concave area 214 disclosed above. Therefore, the vertical body portion 502 forms a larger arm 514 that overhangs the carpet 306 (FIG. 3).

FIG. 6 shows an example threshold 600 that has a substantially similar shape as the threshold 200 in FIGS. 2 and 3. However, in FIG. 6, the threshold 600 has a channel 602 extending into a bottom surface 604 of a vertical body portion 606. The channel 602 helps to keep the thickness of the threshold 600 more constant throughout the extrusion process, which helps to improve extension quality (e.g., minimizes potential flows due to cooling rates and material flows). The channel 602 also helps to reduce (e.g., minimize) material usage and weight.

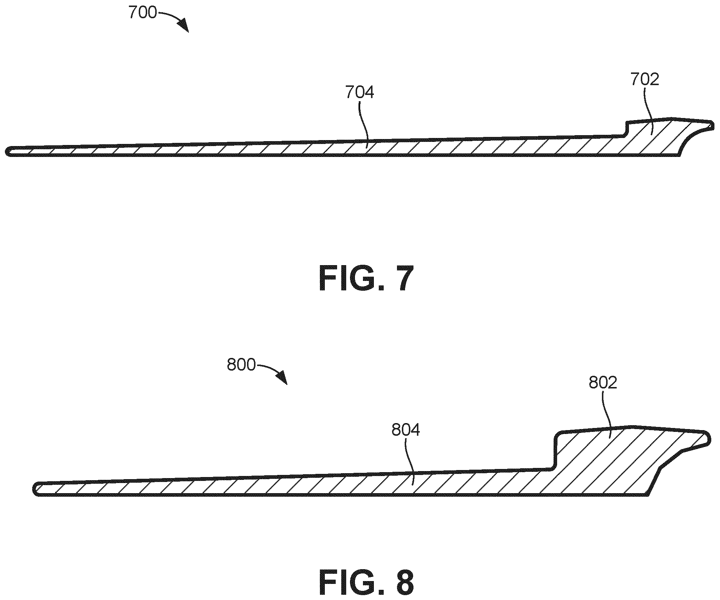

FIG. 7 shows an example threshold 700 having a vertical body portion 702 and a ramp portion 704. The vertical body portion 702 and the ramp portion 704 are similar to the vertical body portion 202 and the ramp portion 204 disclosed above. However, in this example, the ramp portion 704 is relatively wide (in the horizontal direction of FIG. 7) compared to the width of the vertical body portion 702. Further, the vertical body portion 702 is relatively short compared to other vertical body portions. Therefore, the threshold 700 can be advantageous for use with thinner flooring materials. The longer ramp provides a more gradual increase or slope for the flooring material.

FIG. 8 shows an example threshold 800 having a vertical body portion 802 and a ramp portion 804. The threshold 800 is substantially the same as the threshold 700 of FIG. 7. However, the threshold 800 has a shorter ramp portion. Also, the vertical body portion 802 is higher. Therefore, this threshold 800 is advantageous for use with thicker flooring materials.

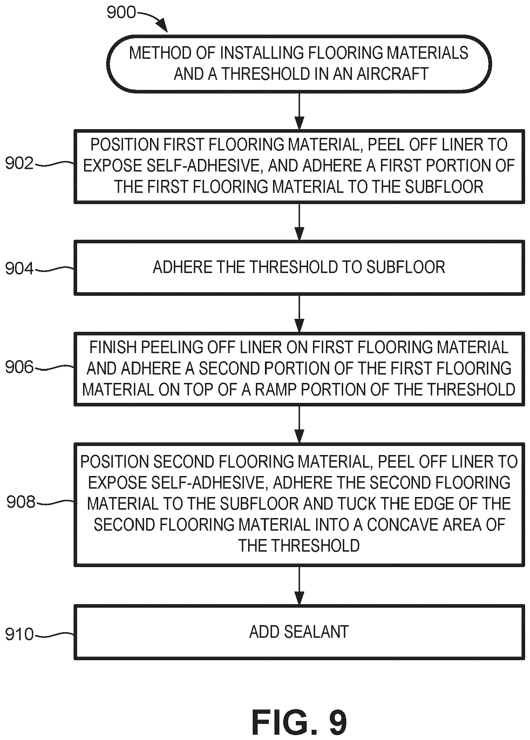

FIG. 9 is a flowchart representative of an example method 900 of installing flooring materials and the example threshold 200 in an aircraft, such as the aircraft 100. The example method 900 is disclosed in connection with the mat 304 as the first flooring material and the carpet 306 as the second flooring material. However, the example method can be similarly performed in connection with other types of flooring materials. Further, the example method 900 can be implemented in connection with other types of thresholds, such as the thresholds of FIGS. 5-8.

At block 902, the method 900 includes positioning the mat 304 in the desired location on the subfloor 302, such as by one or more installer(s). Then, the installer(s) adhere a first portion of the mat 304 to the subfloor 302. For example, the installer(s) can lift back a corner or section of the mat 304 and peel away the liner to expose the adhesive layer 322 (e.g., the self-adhesive layer). The mat 304 can then be laid back on the subfloor 302 to adhere the first portion of the mat 304 to the subfloor 302. All of the mat 304 is adhered to the subfloor 302 except a second portion along the first edge 314. In some examples, the liner is kept on the bottom of the mat 304 along the second portion so the mat 304 does not accidently adhere to the subfloor 302. In other examples, the mat 304 may be adhered to the subfloor 302 using a double-sided tape that does not come already installed on the mat 304.

At block 904, the method 900 includes positioning the threshold 200 in the desired location along near the first edge 314 of the mat 304. In some examples, the threshold 200 can be adhere to the subfloor 302 with the adhesive layer 308. In some examples, the adhesive layer 308 is double-sided tape. In such an example, the double-side tape can be adhered to the bottom surface 226 of the threshold 200 first, and then the threshold 200 can be adhered to the subfloor 302. In other examples, the adhesive layer 308 may be a self-adhesive layer already on the bottom surface 226 of the threshold 200. Therefore, the method 900 may include positioning the threshold 200, peeling off a liner that covers the self-adhesive layer, and then adhering the threshold 200 to the subfloor 302. In some examples, prior to adhering the threshold 200, the subfloor 302 is prepared by vacuuming and/or applying a solvent cleaner to help ensure a good bond.

At block 906, the method 900 includes peeling off the liner from the mat 304 and adhering the second portion of the mat 304 on top of the ramp portion 204 of the threshold 200, such that the first edge 314 of the mat 304 is adjacent the first side surface 210 of the vertical body portion 202. As such, the mat 304 is coupled to the ramp portion 204 of the threshold 200.

At block 908, the method 900 includes positioning the carpet 305 in the desired location on the subfloor 302. The carpet 306 is positioned such that the second edge 320 extends under the overhang 215 of the threshold 200. Then, the installer(s) adhere the carpet 306 to the subfloor 302 (e.g., via the adhesive layer 326) and tuck the second edge 320 of the carpet 306 into the concave area 214 (and under the overhang 215) of the threshold 200. The adhesive layer 326 may be a self-adhesive layer or double-sided tape, for example.

At block 910, the method 900 includes adding the sealant 324 between the first edge 314 of the mat 304 and the first side surface 210 of the vertical body portion 202.

In other examples, the flooring materials and the threshold 200 can be installed in a different order or sequence. For example, the carpet 306 can be installed before the mat 304.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified in the below description.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

From the foregoing, it will be appreciated that example systems, apparatus, articles of manufacture, and methods have been disclosed that provide a smooth transition between two flooring materials. The example low profile thresholds disclosed herein reduce or eliminate the noticeable bump or discontinuity in height between the two flooring materials. This reduces or eliminates difficulties with moving wheeled-devices over the threshold. The example thresholds disclosed herein are lighter, use less material, are less prone to failure, and result in great cost savings than known threshold.

Examples and combinations of examples disclosed herein include the following:

Example 1 is an aircraft comprising a subfloor, first flooring material on the subfloor, the first flooring material having a first edge, second flooring material on the subfloor, the second flooring material having a second edge, and a threshold at least partially between the first flooring material and the second flooring material. The threshold includes a vertical body portion having a top surface, a bottom surface opposite the top surface, a first side surface, and a second side surface opposite the first side surface. The vertical body portion has a concave area extending into the second side surface at the bottom surface, wherein the second edge of the second flooring material extends into the concave area. The threshold also includes a ramp portion extending from the first side surface. The ramp portion has a decreasing thickness from the vertical body portion to a distal end of the ramp portion. The ramp portion is positioned between a portion of the first flooring material and the subfloor.

Example 2 includes the aircraft of Example 1, wherein the concave area forms an overhang on the second side surface, the overhang having of a width of less than 2.54 mm (0.100 inches).

Example 3 includes the aircraft of Examples 1 or 2, wherein the threshold is constructed of thermoplastic polyurethane (TPU).

Example 4 includes the aircraft of any of Examples 1-3, wherein the threshold is a monolithic structure.

Example 5 includes the aircraft of any of Examples 1-4, wherein the vertical body portion has a first edge between the top surface and the first side surface and a second edge between the top surface and the second side surface, and wherein the top surface of the vertical body portion is curved between the first edge of the vertical body portion and the second edge of the vertical body portion.

Example 6 includes the aircraft of Example 5, wherein the first edge of the vertical body portion is rounded and the second edge of the vertical body portion is rounded.

Example 7 includes the aircraft of any of Examples 1-6, further including an adhesive layer between the bottom surface of the threshold and the subfloor.

Example 8 includes the aircraft of Example 7, wherein the adhesive layer is double-sided tape.

Example 9 includes the aircraft of any of Examples 1-8, further including an adhesive layer between the first flooring material and a top surface of the ramp portion.

Example 10 includes the aircraft of any of Examples 1-9, further including a sealant between the first edge of the first flooring material and the first side surface of the vertical body portion.

Example 11 includes the aircraft of any of Examples 1-10, wherein the first flooring material is a mat and the second flooring material is carpet.

Example 12 includes the aircraft of Example 11, wherein the second edge of the carpet is edge treated.

Example 13 is a threshold to be installed between two flooring materials, the threshold comprising a vertical body portion having a top surface, a bottom surface opposite the top surface, a first side surface, and a second side surface opposite the first side surface. The second side surface has a concave area at the bottom surface to receive an edge of a flooring material. The concave area forms an overhang on the second side surface. The threshold also includes a ramp portion extending from the first side surface. The ramp portion has a decreasing thickness from the vertical body portion to a distal end of the ramp portion.

Example 14 includes the threshold of Example 13, wherein the vertical body portion has a first edge between the top surface and the first side surface and a second edge between the top surface and the second side surface, and wherein the top surface of the vertical body portion is curved between the first edge of the vertical body portion and the second edge of the vertical body portion.

Example 15 includes the threshold of Example 14, wherein the first edge of the vertical body portion is rounded and the second edge of the vertical body portion is rounded.

Example 16 includes the threshold of any of Examples 13-15, wherein the threshold is constructed of thermoplastic polyurethane (TPU).

Example 17 includes the threshold of any of Examples 13-16, wherein the first side surface does not include an overhang.

Example 18 is a method of installing flooring materials and a threshold in an aircraft, the method comprising adhering a first portion of a first flooring material to a subfloor in the aircraft, and adhering the threshold to the subfloor near a first edge of the first flooring material. The threshold includes a vertical body portion having a top surface, a bottom surface opposite the top surface, a first side surface, and a second side surface opposite the first side surface. The vertical body portion has a concave area extending into the second side surface at the bottom surface and a ramp portion extending from the first side surface, the ramp portion having a decreasing thickness from the vertical body portion to a distal end of the ramp portion. The method also includes adhering a second portion of the first flooring material on top of the ramp portion of the threshold such that the first edge of the first flooring material is adjacent the first side surface of the vertical body portion, and adhering a second flooring material to the subfloor and tucking a second edge of the second flooring material into the concave area of the threshold.

Example 19 includes the method of Example 18, further including adding a sealant between the first edge of the first flooring material and the first side surface of the vertical body portion of the threshold.

Example 20 includes the method of Examples 18 or 19, wherein the concave area forms an overhang on the second side surface of the vertical body portion, the overhang being disposed above a portion of the second flooring material.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An aircraft (100) comprising:
a subfloor (302);
first flooring material (304) on the subfloor (302), the first flooring material (304) having a first edge (314);
second flooring material (306) on the subfloor (302), the second flooring material (306) having a second edge (320); and
a threshold (200) at least partially between the first flooring material (304) and the second flooring material (306), the threshold (200) including:
a vertical body portion (202) having a top surface (206), a bottom surface (208) opposite the top surface (206), a first side surface (210), and a second side surface (212) opposite the first side surface (210), the vertical body portion (202) having a concave area (214) extending into the second side surface (212) at the bottom surface (208), wherein the second edge (320) of the second flooring material (306) extends into the concave area (214); and
a ramp portion (204) extending from the first side surface (210), the ramp portion (204) having a decreasing thickness from the vertical body portion (202) to a distal end (224) of the ramp portion (204), the ramp portion (204) positioned between a portion of the first flooring material (304) and the subfloor (302).

2. The aircraft (100) of claim 1, wherein the concave area (214) forms an overhang (215) on the second side surface (212), the overhang (215) having of a width of less than 2.54 mm.

3. The aircraft (100) of claim 1 or 2, wherein the threshold (200) is a monolithic structure.

4. The aircraft (100) of anyone of claims 1-3, wherein the vertical body portion (202) has a first edge (216) between the top surface (206) and the first side surface (210) and a second edge (218) between the top surface (206) and the second side surface (212), and wherein the top surface (206) of the vertical body portion (202) is curved between the first edge (216) of the vertical body portion (202) and the second edge (218) of the vertical body portion (202); and
wherein the first edge (216) of the vertical body portion (202) is rounded and the second edge (218) of the vertical body portion (202) is rounded.

5. The aircraft (100) of anyone of claims 1-4, further including an adhesive layer (308) between the bottom surface (226) of the threshold (200) and the subfloor (302).

6. The aircraft (100) of anyone of claims 1-5, further including an adhesive layer (322) between the first flooring material (304) and a top surface (220) of the ramp portion (204).

7. The aircraft (100) of anyone of claims 1-6, further including a sealant (324) between the first edge (314) of the first flooring material (304) and the first side surface (210) of the vertical body portion (202).

8. The aircraft (100) of anyone of claims 1-7, wherein the first flooring material (304) is a mat and the second flooring material (306) is carpet.

9. The aircraft (100) of claim 8, wherein the second edge (320) of the carpet is edge treated.

10. A threshold (200) to be installed between two flooring materials, the threshold (200) comprising:
a vertical body portion (202) having a top surface (206), a bottom surface (208) opposite the top surface (206), a first side surface (210), and a second side surface (212) opposite the first side surface (210), the second side surface (212) having a concave area (214) at the bottom surface (208) to receive an edge of a flooring material, the concave area (214) forming an overhang (215) on the second side surface (212); and
a ramp portion (204) extending from the first side surface (210), the ramp portion (204) having a decreasing thickness from the vertical body portion (202) to a distal end (224) of the ramp portion (204).

11. The threshold (200) of claim 10, wherein the vertical body portion (202) has a first edge (216) between the top surface (206) and the first side surface (210) and a second edge (218) between the top surface (206) and the second side surface (212), and wherein the top surface (206) of the vertical body portion (202) is curved between the first edge (216) of the vertical body portion (202) and the second edge (218) of the vertical body portion (202).

12. The threshold (200) of claim 11, wherein the first edge (216) of the vertical body portion (202) is rounded and the second edge (218) of the vertical body portion (202) is rounded.

13. The threshold (200) of anyone of claims 10-12, wherein the threshold (200) is constructed of thermoplastic polyurethane (TPU).

14. A method of installing flooring materials and a threshold (200) in an aircraft (100), the method comprising:
adhering a first portion of a first flooring material (304) to a subfloor (302) in the aircraft (100);
adhering the threshold (200) to the subfloor (302) near a first edge (314) of the first flooring material (304), the threshold (200) including:
a vertical body portion (202) having a top surface (206), a bottom surface (208) opposite the top surface (206), a first side surface (210), and a second side surface (212) opposite the first side surface (210), the vertical body portion (202) having a concave area (214) extending into the second side surface (212) at the bottom surface (208); and
a ramp portion (204) extending from the first side surface (210), the ramp portion (204) having a decreasing thickness from the vertical body portion (202) to a distal end (224) of the ramp portion (204);
adhering a second portion of the first flooring material (304) on top of the ramp portion (204) of the threshold (200) such that the first edge (314) of the first flooring material (304) is adjacent the first side surface (210) of the vertical body portion (202); and
adhering a second flooring material (306) to the subfloor (302) and tucking a second edge (320) of the second flooring material (306) into the concave area (214) of the threshold (200).

15. The method of claim 14, further including adding a sealant (324) between the first edge (314) of the first flooring material (304) and the first side surface (210) of the vertical body portion (202) of the threshold (200).
